# EUROPEAN PATENT APPLICATION

(11) **EP 1 914 269 A1**
(43) Date of publication of application: **23.04.2008**
(21) Application number: 06122366.5
(22) Date of filing: 16.10.2006
(51) Int. Cl.: C08J 9/36, C08J 9/40

(54) **Porous materials and process for their production**

(71) Applicant: BASF SE, 67056 Ludwigshafen (DE)
(72) Inventor: Frenzel, Stefan Dr., 68161 Mannheim (DE); Gonzales, Denis Alfred, 1150 Brussels (BE); Bogaerts, iris, 2800 Mechelen (BE); Tomarchio, Vincenzo, 1050 Brussel (BE); Huhn, Wolfgang Edgar Dr., 66012 Chieti (IT); Scialla, Stefano, 00128 Rome (IT)

(57) **Abstract**

The present invention relates to a porous material comprising
(a) an open-cell foam with a density in the range from 5 to 1,000 kg/m³ and with an average pore diameter in the range from 1 µm to 1 mm,
(b) a storage system comprising
(c) a perfume,

wherein materials that are to form said storage system (b) are selected from carrier particles, nano-latexes, matrix polymer compositions, amine-assisted delivery compositions, perfumed polymers and combinations thereof.

## Description

The present invention relates to a porous material comprising
(a) an open-cell foam with a density in the range from 5 to 1,000 kg/m³ and with an average pore diameter in the range from 1 µm to 1 mm,
(b) a storage system comprising
(c) a perfume,
wherein materials that are to form said storage system (b) are selected from carrier particles, nano-latexes, matrix polymer compositions, amine-assisted delivery compositions, perfumed polymers and combinations thereof.

The present invention further relates to a process for production of inventive porous materials, and to the use of inventive porous materials for production of cleaning materials, filters, humidifiers, water distributors, packaging elements, sound-deadening elements, or buildings-insulation materials.

Foams, specifically those which are known as open-cell foams, are used in numerous sectors. In particular open-cell foams composed of synthetic materials have proven versatile. By way of example, mention may be made of seat cushions, filter materials, air-conditioning porous materials, and automobile parts, and also cleaning materials.

Foams are nowadays also frequently used as cleaning materials, such as synthetic sponges and wipers.

Use of foam, such as melamine-formaldehyde resin foam, referred to herein as melamine foam, and phenolic foam as a substrate of a hard surface cleaning implement is well known. Cleaning implements of cut or moulded pieces of melamine foam have become popular to remove soils and/or stains from hard surfaces (i.e., cleaning of hard surfaces) such as tiles, walls, floors, sanitary fittings such as sinks, showers, shower curtains, wash basins, WCs, household appliances including, but not limited to, refrigerators, freezers, washing machines, automatic dryers, ovens, microwave ovens, dishwashers and so on.

It is desirable to also provide the respective surface with a pleasant odour after cleaning. It is furthermore desirable to perform both working steps - cleaning and providing the surface with pleasant odour - in one combined step.

JP63196699A discloses a synthetic resin foam, having a cleaning soap impregnated in the cells of the foam and optionally a perfume, a dye and other additives. The synthetic resin may include a thermosetting phenolic, melamine, urea, alkide and polyiscocyanate resins; however, a soft polyurethane foam is preferred. The foam is wetted before use. Such foam only have a moderate cleaning performance.

WO 2006/08054 and WO 2006/58675 each disclose certain modified open-cell foams and a method for cleaning surfaces using such modified open-cell foams. Further ingredients for the modified open-cell foams according to each WO 2006/08054 and WO 2006/58675 may be fragrances such as perfumes. WO 2006/77129 suggests to certain employ open-cell foams for cleaning structured surfaces. Further ingredients may be fragrances such as perfume. WO 2006/77239 discloses a method for cleaning surfaces using certain aminoplast foam pieces. Further ingredients may be fragrances such as perfumes.

Although the cleaning performance of foams according to WO 2006/08054, WO 2006/58675, WO 2006/77129, and WO 2006/77239 is very good in most cases, the perfume is usually used up quickly. After short application of the respective open-cell foams or modified open-cell foams, no further release of pleasant odour can be achieved.

Thus, the need exists for an improved cleaning implement that is able to clean tough stains satisfactorily, provide a controlled-release of perfume and being convenient for use.

An object was therefore to provide materials that avoid the disadvantages of the materials known from the prior art. A further object was to provide a process for production of novel materials. Another object was to provide uses for inventive materials, and an object was to provide a method for the use of inventive materials.

The porous materials defined at the outset have accordingly been found, and said porous materials are also termed inventive porous materials hereinafter.

Inventive porous materials are open-cell foams, i.e. foams in which at least 50% of all of the lamellae are open, preferably from 60 to 100%, and particularly preferably from 65 to 99.9%, determined to DIN ISO 4590.

Inventive porous materials are preferably based on rigid foams, which for the purposes of the present invention are foams whose compressive strength, determined to DIN 53577, is 1 kPa or above at 40% compression.

Inventive porous materials have a density in the range from 5 to 1000 kg/m³, preferably from 6 to 500 kg/m³ and particularly preferably in the range from 7 to 300 kg/m³.

Inventive porous materials have an average pore diameter (number-average) in the range from 1 µm to 1 mm, preferably from 50 to 500 µm, determined via evaluation of micrographs of sections.

In one embodiment of the present invention, inventive porous materials have a BET surface area in the range from 0.1 to 50 m²/g, preferably from 0.5 to 20 m²/g, determined according to DIN 66131.

In one embodiment of the present invention, inventive porous materials and foams (a) are erodible. The term "erodible" in the context of the present invention refers to porous materials or foams (a), respectively, that break or crumble into small particles during use for, e.g., cleaning of surfaces and which can peel off by friction, especially by manual friction. Said pieces in most cases do not exceed an average diameter of 1 to 3 mm, and in many cases the average diameter can be even less.

Inventive porous materials comprise of
(a) an open-cell foam with a density in the range from 5 to 1,000 kg/m³ and with an average pore diameter in the range from 1 µm to 1 mm,
(b) a storage system comprising
(c) a perfume,
wherein materials that are to form said storage system (b) are selected from carrier particles, nano-latexes, matrix polymer compositions, amine-assisted delivery compositions, perfumed polymers and combinations thereof.

For the purposes of the present invention, unmodified open-cell foams (a) that are part of the inventive porous materials are very generally also termed unmodified foams (a) or foams (a). The unmodified open-cell foams (a) are described in more detail below.

Foams (a) in the context of the present invention are particularly foams (a) in which at least 50% of all of the lamellae are open, preferably from 60 to 100%, and particularly preferably from 65 to 99.9%, determined to DIN ISO 4590. Said cells can be shaped, e.g. like channels.

Foams (a) are preferably rigid foams, which for the purposes of the present invention are foams whose compressive strength, determined to DIN 53577, is 1 kPa or more at 40% compression.

Foams (a) have a density in the range from 5 to 500 kg/m³, preferably from 6 to 300 kg/m³, and particularly preferably in the range from 7 to 300 kg/m³.

Foams (a) have an average pore diameter (number-average) in the range from 1 µm to 1 mm, preferably from 50 to 500 µm, determined via evaluation of micrographs of sections.

In one embodiment of the present invention, foams (a) may have at most 20, preferably at most 15, and particularly preferably at most 10 pores per m² of diameter in the range up to 20 mm. The remaining pores usually have a smaller diameter.

In one embodiment of the present invention, foams (a) have a BET surface area in the range from 0.1 to 50 m²/g, preferably from 0.5 to 20 m²/g, determined to DIN 66131.

In one embodiment of the present invention, foams (a) have a sound-absorption level above 50%, measured to DIN 52215 at a frequency of 2000 Hz and a layer thickness of 50 mm of the relevant foam (a).

In one specific embodiment of the present invention, foams (a) have a sound-absorption level above 0.5, measured to DIN 52212 at a frequency of 2000 Hz and a layer thickness of 40 mm of the respective foam (a).

Foams (a) may have any desired geometric shapes, e.g. sheets, spheres, cylinders, powders, cubes, flakes, blocks, saddles, bars, or square columns. The size dimensions of foams (a) used as starting material are non-critical. In one embodiment of the present invention, the starting material comprises foams (a) composed of synthetic organic material, and preferably comprises melamine foams.

Melamine foams particularly suitable for carrying out the inventive production process are known per se. By way of example, they are produced via foaming of
i) a melamine-formaldehyde precondensate which may contain other carbonyl compounds, such as aldehydes, co-condensed alongside formaldehyde,
ii) one or more blowing agents,
iii) one or more emulsifiers,
iv) one or more hardeners.

Melamine-formaldehyde precondensates i) may be non-derivatized precondensates, or else may be derivatized precondensates, and by way of example up to 20 mol% of the melamine may have been replaced by other thermoset-forming materials known per se, e.g. alkyl-substituted melamine, urea, urethane, carboxamides, dicyandiamide, guanidine, sulfuryl amide, sulfonamides, aliphatic amines, phenol, and phenol derivatives. Examples of other carbonyl compounds which may be present co-condensed alongside formaldehyde in derivatized melamine-formaldehyde precondensates are acetaldehyde, trimethylolacetaldehyde, acrolein, furfurol, glyoxal, phthalaldehyde and terephthalaldehyde.

Suitable blowing agents ii) are: water, inert gases, in particular carbon dioxide, and physical blowing agents. Physical blowing agents are compounds that are inert toward the starting components and are usually liquid at room temperature and vaporize under the conditions of the urethane reaction. The boiling point of these compounds is preferably below 110°C, in particular below 80°C. Among physical blowing agents are also inert gases which are introduced into the starting components i) and ii) or dissolved therein, for example carbon dioxide, nitrogen or noble gases.

Suitable compounds which are liquid at room temperature are usually selected from the group consisting of alkanes and/or cycloalkanes having at least 4 carbon atoms, dialkyl ethers, esters, ketones, acetals, fluoroalkanes having from 1 to 8 carbon atoms and tetraalkylsilanes having from 1 to 3 carbon atoms in the alkyl chain, in particular tetramethylsilane.

Examples which may be mentioned are: propane, n-butane, isobutane and cyclobutane, n-pentane, isopentane and cyclopentane, cyclohexane, dimethyl ether, methyl ethyl ether, methyl tert-butyl ether, methyl formate, acetone and fluorinated alkanes which can be degraded in the troposphere and therefore do not damage the ozone layer, e.g. trifluoromethane, difluoromethane, 1,1,1,3,3-pentafluorobutane, 1,1,1,3,3-pentafluoropropane, 1,1,1,2-tetrafluoroethane, 1,1,1-trifluoro-2,2,2-trichloroethane, 1,1,2-trifluoro-1,2,2-trichloroethane, difluoroethanes and heptafluoropropane. The physical blowing agents mentioned can be used either alone or in any combinations with one another.

The use of perfluoroalkanes for producing fine cells is known from EP-A 0 351 614.

Emulsifiers iii) used may be conventional non-ionic, anionic, cationic, or betainic surfactants, in particular C₁₂-C₃₀-alkylsulfonates, preferably C₁₂-C₁₈-alkylsulfonates, and polyethoxylated C₁₀-C₂₀-alkyl alcohols, in particular having the formula R¹-O(CH₂-CH₂-O)ₓ-H, where R¹ is selected from C₁₀-C₂₀-alkyl and x may be, by way of example, a whole number in the range from 5 to 100.

Suitable hardeners iv) are, in particular, acidic compounds such as inorganic Brønsted acids, e.g. sulfuric acid or phosphoric acid, organic Brønsted acids such as acetic acid or formic acid, Lewis acids and also latent acids.

Examples of suitable melamine foams are described in EP-A 0 017 672.

Foams (a) may also comprise additives customary in foam chemistry, for example anti-oxidants, flame retardants, fillers, colorants such as pigments or dyes, and biocides, such as

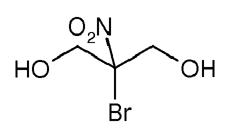

Inventive porous systems furthermore comprise of a storage system (b), wherein material that are to form said storage system (b) are selected from carrier particles, nano-latexes, matrix polymer compositions, perfumed polymers and combinations thereof.

A storage system (b) in the context of the present invention can contain perfume (c) in finely dispersed form. Perfume (c) can be deposited on the outer surface of said storage system, or perfume (c) can be absorbed in finely dispersed form in the storage system (b). Capsules that contain drops of perfume (c) are no storage systems (b) in the context of the present invention.

Storage system (b) can be particulate or in the form of films.

Material that are to form storage systems (b) are selected from carrier particles, nano-latexes, matrix polymer compositions, perfumed polymers and combinations thereof.

In one embodiment of the present invention, materials that are to form storage system (b) are selected from carrier particles. Carrier particles in the context of the present invention are understood to mean porous particles that can absorb or adsorb perfume (c) and then release said perfume (c) either over an extended period of time or as a result of an external stimulant. Preferably, said release may be triggered by, e.g., pressure change, moisture change, change of pH-value, temperature change, change of ionic strength of a surrounding medium or combinations thereof. Preferably, carrier particles may comprise a material selected from the group consisting of amorphous silicates, crystalline non-layered silicates, layered silicates, calcium carbonates, calcium/sodium carbonate double salts, sodium carbonates, clays, metal oxides (e.g. alumina, aluminates, aluminosilicates), zeolites, alkali metal phosphates, macroporous zeolites, chitin micro beads, carboxyalkylcellulose, in particular carboxymethylcellulose, carboxyalkylstarches, in particular carboxymethylstarch, porous starches, chemically modified starches, e.g., oxidized starch, further starch derivatives, low and high molecular weight sugars, fumed and precipitated silicas, and mixtures thereof. Zeolite is particularly preferred: it has been found that desorption of perfume (c) previously adsorbed on zeolite is driven by the adsorption of moisture, which is an exothermic reaction. The heat provided by the adsorption of moisture then aids the diffusion of perfume (c) by convection. Zeolites useful herein are disclosed in US 5,955,419. Perfume loaded zeolites useful herein and methods for their manufacture are disclosed in WO 02/089862. Preferably the diameter of perfume carriers is less than 100 µm, preferably less than 70 µm, preferably less than 40 µm, more preferably less than 30 µm and even more preferably less than 5 µm. A minimum diameter of perfume carriers can be, e.g. 1 µm.

In a preferred embodiment the carrier particles may themselves be encapsulated. A preferred example comprises encapsulating perfume loaded zeolite particles with starch. Preferably, in addition to encapsulation with starch, perfume loaded carrier particles may also be coated with a hygroscopic or deliquescent composition so as to reduce or prevent the release of perfume as a result of ambient humidity, and ensure that the perfume is not released until the cleaning implement is wetted during use. Water-donating materials may also be incorporated to encourage a background odour before use. A combination of hygroscopic or deliquescent materials and water-donating materials may be used to tune the release of perfume (c) such that a desired amount is released prior to use, regardless of the ambient humidity, while providing freshness upon exposure to water.

Materials that are to form storage system (b) can be selected from nano-latexes. Nano-latexes comprise polymeric particles having a diameter in the range from 30 nm to 50 µm and wherein the perfume (c) is not chemically bound to the polymer from which said polymer particles are formed, preferably the polarity of the polymer from which said polymer particles are formed and perfume (c) are closely matched. Said polymeric particles may be water insoluble. Polymeric particles of nano-latexes preferably will be made from monomers selected from the group consisting of cationic monomers, non-cationic monomers, and mixtures thereof. Polymers from which said polymer particles are formed will preferably be made from 50% to 99.9% by weight, preferably from 60% to 95% by weight of non-cationic monomers; from 0.1 % to 50%, preferably from 1 % to 10% by weight of cationic monomers; and from 0% to 25%, preferably from 1% to 10% by weight of cross-linking monomers. Preferably, the weight ratio of the non-cationic monomers to cationic monomers to crosslinking monomers in the monomer mixture is from 10:0.02:0 to 5:2.5:1. Preferably, cationic monomers comprise of a cationic unit. A cationic unit is understood to mean a moiety which when incorporated into the structure of polymeric particles of nano-latexes is capable of maintaining cationic charge within the pH-value range of from 2 to 8. The cationic unit is not required to be protonated at every pH value within the range of about 2 to about 8. Suitable cationic monomers include N,N-dimethylamino C₁-C₄-alkyl (meth)acrylates, especially N,N-dimethylaminoethyl methacrylate, vinyl pyrrolidones, vinyl imidazoyls, vinyl ethers having dialkyl amino groups, vinyl pyridines, alkyl acrylamides, dialkyl acrylamides, dialkylamino alkyl acrylamide, and amino alkyl acylamides. Non-cationic monomers may be hydrophobic group-containing monomers. Examples of the hydrophobic group include C₁-C₂₀-alkyls, C₃-C₁₀-cylcoalkyls, aryls, especially phenyl, alkaryls, aralkyls such as benzyl and combinations thereof. Examples of suitable non-cationic-monomers include methyl methacrylate, methyl acrylate, ethyl acrylate, n-propyl acrylate, iso-propyl acrylate, n-butyl acrylate, hydroxyethyl acrylate, hydroxypropyl acrylate, benzyl acrylate, 2-ethylhexyl acrylate, n-propyl methacrylate, methacrylic acid, acrylic acid, acrylamide, methacrylamide, styrene, α-methyl styrene, hyroxyethyl methacrylate, hydroxypropyl methacrylate, hydroxybutyl acrylate, hydroxybutyl methacrylate, PEG acrylate, phenyl methacrylamide, t-butyl methacrylamide, p-hydroxyphenyl methacrylamide, vinyl ethers vinyl ketones, vinyl acetates, vinyl phenols, acrylamido-2-methylpropanesulfonic acid, vinylsulfonate, vinyl propionate, methylallysulfonic acid, N-vinyl formamide and N-vinylpyrrolidone. Preferably the polymeric particle also comprises a crosslinking monomer. Non-limiting examples of suitable cross-linking monomers include diacrylate, dimethyl acrylate, diethylene glycol, diethylene glycol diacrylate, 1 ,3-divinylbenzene, divinyl ether, ethylene glycol dimethacrylate, pentaerythritol triacrylate, polyallyl sucrose, trivinyl benzene, divinyl toluene, trivinyl toluene, triethyleneglycol dimethacrylate, tetraethyleneglycol dimethacrylate, allylmethacrylate, diallylmaleate, diallylmaleate, and 1,4-butanediol diacrylate, 1,2-ethanediol diacrylate, 1,3-propanediol diacrylate, 1,6-hexanediol diacrylate, and ethylene glycol diacrylate.

Polymers from which said polymer particles for nano-latexes are formed will preferably have a weight average molecular weight of from 1,000 to 2,000,000, preferably 10,000 to 750,000 and most preferably from 20,000 to 500,000 Daltons. The molecular weight may be determined by conventional means such as gel permeation chromatography (GPC). The monomers from which said polymer particles for nano-latexes are formed may be selected so that they have an affinity for perfume (c).

Preferably perfume (c) has at least one of the following properties: a Kovats Index of less than 1700, a molecular weight less than 200 g/mol, a ClogP of less than 1.3 and/or a boiling point of less than 250°C.

The boiling points of many perfumes (c) are reported in e.g. "Perfume and Flavor Chemicals (Aroma Chemicals)", Steffen Arctander, Published by the author, 1969. Otherwise they may be obtained using any means known in the art.

The octanol/water partitioning coefficient of a material is the ratio between its equilibrium concentrations in octanol and water. The octanol/water partitioning coefficient can alternatively be reported on a base 10 logarithmic scale, as log P, and when the calculated value is reported, as ClogP. The perfume (c) suitable for use in this invention preferably have logP of less than 3.

The logP of many perfumes (c) has been reported; for example, the Pmona92 database, available from Daylight Chemical Information Systems, Inc. (Daylight CIS), Irvine, California, contains many, along with citations to the original literature. However, the logP values are most conveniently calculated by the CLOGP program, also available from Daylight CIS. This program also lists experimental values when they are available in the Pomona92 database. The "calculated logP" (ClogP) is determined by the fragment approach of Hansch and Leo (cf. Leo, in Comprehensive Medicinal Chemistry, Vol. 4, C. Hansch, P.G. Sammens, J. B. Taylor and C. A. Ramsden, Eds., p.295, Pergamon Press, 1990). The fragment approach is based on the chemical structure of each perfume ingredient, and takes into account the numbers and types of atoms, the atom connectivity, and chemical bonding. The ClogP values, which are the most reliable and widely used estimates for the physiochemical property, are preferably used instead of the experimental logP values in the selection of perfume ingredients which are useful in the present invention.

The Kovats Index (Kovats Retention Index) is an accurate method of reporting gas chromographic (GC) data for interlaboratory substance identification. It is used for eliminating the effects of instrument parameters on the correlations between retention time and the chemical identification by CG. The Kovats Index (I or KI) value of many perfumes (c) has been reported. The Kovats Index value of an unknown substance can be calculated from an equation known in the art.

In another embodiment of the present invention, storage systems (b) can be selected from matrix polymer compositions.

In the context of the present invention, matrix polymer compositions are understood to mean any composition where a perfume (c) is absorbed into a polymer system, wherein the polarity of the polymer and perfume are closely matched, and thereby allow perfume (c) to diffuse out slowly over an extended period of time.

A preferred matrix polymer composition in the context of the present invention refers to a polymeric composition essentially comprising
(B1) a copolymer of ethylene with at least another monomer comprising a heteroatom, also being referred to as copolymer (B1),
(B2) more than about 10% of a plasticizer or blend of plasticizers comprising a heteroatom, also being referred to as plasticizer (B2) or plasticizers (B2). Such matrix polymer compositions can be applied as hot-melt adhesives, emulsions, and dispersions or even in combination with solvents. Without being bound by theory, it is believed that matching the polarity between the plasticized polymeric matrix and the perfume (c) is required to provide good incorporation and sustained deliver of the volatile material. Hence the copolymer (B1) and plasticizer (B2) can be preferably selected in such a way that the polarity of the plasticized matrix substantially matches the polarity of the perfume (c). The polarity can be evaluated using one of the methods known in the art.

Monomers comprising at least one heteroatom per molecule include all those monomers which comprise at least a C-X linkage in the molecule wherein X is neither C nor H. Said C-X linkage is a preferably a polar linkage. Preferably the C-X linkage is selected from C-N linkages, C-S linkages, C-F linkages, C-Cl linkages, or C-O linkages. More preferably the polar linkage is part of an ester group. Preferred monomers comprising at least one heteroatom are vinyl acetate, vinyl alcohol, methyl acrylate, ethyl acrylate, n-butyl acrylate, acrylic acid and salts formed therefrom, methacrylic acid and salts formed therefrom, methacrylic acid and salts formed therefrom, maleic anhydride, glycidyl methacrylate and carbon monoxide.

Suitable copolymers (B1) can be block or non-block copolymers, graft copolymers, copolymers with side chains or crosslinkages and copolymers where ethylene monomers are randomly copolymerised with monomers comprising at least a heteroatom. Among preferred copolymers (B1) are, for example, ethylene-vinyl ester copolymers, ethylene-acrylic ester copolymers, ethylene-methacrylic ester copolymers, ethylene-acrylic acid copolymers and their salts, ethylene-methacrylic acid copolymers and their salts, ethylene-vinyl ester-maleic anhydride copolymers, ethylene-acrylic ester-maleic anhydride copolymers, ethylene-vinyl ester-glycidyl methacrylate copolymers, ethylene-acrylic ester-glycidyl methacrylate copolymers, ethylene-maleic anhydride copolymers, ethylene-glycidyl methacrylate copolymers. The monomer comprising at least a heteroatom in the copolymers suitable for the present invention preferably represent from about 10% to about 90% of the total weight of the copolymer, more preferably at least about 14%, and most preferably at least about 18%.

Commercially available examples of copolymers (B1) are ethylene-vinyl acetate copolymers such as those sold under the trade names Elvax™ by Dupont, Evathane™ by Atofina, Escorene™ by Exxon and Levapren™ and Levamelt™ by Bayer and ethylene-acrylic ester copolymers such as those sold under the name Lotryl™ by Atofina and Acronal® from BASF.

The second component in the polymeric composition is a plasticizer (B2) or blend of plasticizers (B2) and comprises at least one heteroatom per molecule. Plasticizer (B2) is preferably compatible with copolymer (B1). Plasticizer (B2) include all those plasticizers which comprise at least a C-X linkage in which X is not C or H. Preferably, said linkage is a polar linkage. Preferably the carbon atom is linked to an N, S, F, Cl or O atom. More preferably said polar linkage is part of a carbonyl group and, more preferably, of an ester group.

Suitable plasticizers include citric acid esters, low molecular weight polyesters, particularly with M_{w} of maximum 1500 g/mol (polyethers, liquid rosin esters, aromatic sulphonamides, phthalates, benzoates, sucrose esters, derivatives of polyfunctional alcohols (where polyfunctional means having 2 or more hydroxyl groups), adipates, tartrates, sebacates, esters of phosphoric acid, fatty acids and diacids, fatty alcohols and diols, epoxidized vegetable oils and mixtures thereof. As already mentioned above, the different polarity of plasticizer (B2) (measurable with any method known to those skilled in the art, for example water/octanol partition coefficient) can be used to tune the polarity of the polymeric composition in order to provide a better match with the polarity of the perfume.

Preferably, polymeric compositions for use in the present invention comprise from 5% to 75%, more preferably from 10% to 50% by weight of the polymeric composition of the copolymer (B1); from 10% to 60%, preferably from 15% to 40% by weight of the polymeric composition, of plasticizer (B2) or blend of plasticizers (B2) comprising at least one heteroatom; and more than 10% by weight, preferably more than 20%, more preferably more than 30% of a perfume; the perfume is preferably comprised up to a maximum percentage of about 90% by weight of said polymeric composition.

The polymeric compositions described above may also comprise additional optional components to further improve the processability and also the mechanical characteristics as well as other characteristics, including tackiness, resistance to ageing by light, oxygen and heat, and the visual appearance etc. of the objects formed from such polymeric compositions. Further optional ingredients include other polymers or copolymers, fillers, crosslinkers, pigments, dyes, anti-oxidants and other stabilisers, which can also be added to provide desired properties to the composition.

For example, the polymeric compositions described above may preferably include a tackifier. Tackifiers otherwise known as tackifier resins or tackifying resins are materials which are commonly sold as such and are used in hot-melt adhesives in order to improve the adhesive properties of the material. A good tackifier is compatible with the copolymer, has a low molecular weight with respect to the copolymer and a Tg (glass transition temperature) which is higher than that of the copolymer (B1), so that when introduced into the polymeric composition the Tg of said composition is increased. Preferred tackifiers for use herein are thermoplastic materials, stable at about 200°C, amorphous glassy at room temperature, and having a Tg higher than about 50°C, preferably between about 80 and about 125°C. Preferred tackifiers for use herein have a molecular weight comprised between about 500 and about 2000 Daltons.

Tackifiers useful in the present invention are organic compounds with polycyclic structures, preferred are those which are not aliphatic hydrocarbons. More preferred are aromatic tackifiers and tackifiers which comprise oxygen atoms in the molecule. Most preferred tackifiers are rosin and its derivatives which are solid at room temperature. When present in the composition the tackifier will preferably represent from about 10% to about 60%, more preferably from about 15% to about 40% by weight of the copolymer.

In one embodiments of the present invention, copolymers PEG-VAc colpolymers as matrix will comprise a polyether group and a non-polyether group. Such copolymers can be both block and non-block copolymers, also copolymers formed by the grafting of polyether groups onto polymer structures, copolymers where the polyether group is in a side chain or in a crosslink and copolymers where ether monomers are randomly copolymerised with non-ether monomers are suitable copolymers for the present invention. Among preferred copolymers obtained from at least one monomer comprising an ether group and at least one monomer not comprising an ether group which are suitable for the present invention are, for example, polyether amide copolymers, polyether ester copolymers, polyether urethanes, sulfonated polyether ester copolymers, polyether ester amide copolymers, polyether ester amide copolymers, and copolymers formed by the polymerisation of polyether acrylates with other acrylic monomers/oligomers.

When a polyether group is present in the copolymer, preferred polyether groups are those with monomers which contain more than 2 carbon atoms, more preferred are those with monomers which contain more than 3 carbon atoms. Most preferred polyether containing groups are polypropylene glycol and, even more preferred, polytetramethylene glycol.

The monomer comprising an ether group in the copolymers represents at least 5% of the total weight of the copolymer, preferably at least 10%, and even more preferably at least 15%.

Preferred copolymers are poly-ether-amide block copolymers (e.g. Pebax™), polyether-ester-amide block copolymers, polyether polyester block copolymers (e.g. Hytrel™), and polyurethane copolymers containing polyether blocks (e.g. Estane™, Sancure™ from Noveon, Astacin from BASF), and poly-ether-vinylacetate or mixtures thereof. Among the various copolymers of this type those which have a preferred polyether group as mentioned above are most preferred. Therefore, the most preferred copolymers are those in which the polyether group is a polypropylene glycol or a polytetramethylene glycol.

The compositions described above can be formulated as hot melts with very low application temperatures, typically below about 100 °C and in some cases if desired even below about 70°C. This can be achieved by having low levels of plasticizer or no plasticizers at all in PEG-VAc copolymers as matrix. It is believed that this is due to the particular selection of tackifier and to the particular combination of ingredients of the compositions. This is a particularly desirable property of the composition as it enables processing without substantial loss of perfume during either the manufacture or subsequent application, both of which typically take place in the molten state. Again the polarity of the polymer composition is matched closely to that of the perfume. This may be done using any means known in the art, including using the octanol/water partitioning coefficient.

In all of the abovementioned matrix polymer compositions it is believed that the long lasting perfume (c) delivery is as a result of an interaction between the perfume and polymer composition at the molecular level. It is therefore preferred that perfume (c) is present in the polymer composition in the form of a perfume oil and not in a form which prevents the perfume from becoming chemically dissolved in the plasticized polymer matrix. In particular perfumes where the perfume is bound covalently to a non-volatile molecule are not preferred.

In another embodiment of the present invention, materials that are to form storage system (b) can be selected from amine-assisted delivery compositions. Amine assisted delivery system compositions comprise an amine compound (B3) and a perfume (c). It is prefered that amine compound (B3) and perfume (c) are kept separate prior to introduction into foam (a) or supporting material or the interface between the two. Preferably there should be no reaction between amine compound (B3) and perfume (c) prior to their depositing on foam (a). This means applying them at separate times, from separate containers or from separate holding or delivery means. Suitable amine compounds (B3) include mono-amines and polyamines under the condition that at least 10% of its amino groups are primary amino groups. Preferably, amine compound (B3) will be a polyamine and from 15 to 80% of its amino groups will be primary amino groups.

In one embodiment of the present invention, amine compounds (B3) may be characterised by having an Odour Intensity Index of less than that of a 1 % solution of methylanthranilate in dipropylene glycol.

Benefit agent (B4) is an example for special perfumes (c). Examples for special perfumes (c) are perfume ketones or perfume aldehydes and mixtures thereof. Preferred perfume ketones can comprise any perfume which is chemically a ketone and which can impart a desirable odour or freshness benefit to surfaces that have been contacted with the respective amine-assisted delivery system containing it. The amine-assisted delivery composition can of course contain more than one perfume ketone. Examples for perfume ketones are camphor, buccoxime, methyl β-naphthyl ketone, musk indanone, tonalid/musk plus, α-Damascone, β-Damascone, δ-Damascone, Iso-Damascone, Damascenone, Damarose, methyl-dihydrojasmonate, menthone, carvone, fenchone, α-ionone, β-ionone, dihydro β-ionone, fleuramone, dihydrojasmone, freskomenthe, cis-jasmone, Cedrenyl-ketone, methyl cedrylone, methylacetophenone, paramethoxyacetophenone, para-hydroxyphenyl butanone, celery ketone, 6-isopropyldecahydro-2-naphthone, dimethyloctenone, freskomenthe, 4-(1-ethoxyvinyl)-3,3,5,5-tetramethylcyclohexanone, methylheptenone, 2-(2-(4-methyl-3-cyclohexen-1-yl)-propyl)-cyclopenatone, 1-(para-menthen-6(2)-yl)-1-propanone, 2-acetyl-3,3-dimethylnorbornane, 4-(4-hydroxy-3-methoxyphenyl)-2-butanone, 6,7-dihydro-1,1,3,3-pentamethyl-4(5H)-indanone, 4-Damascol, Dulcinyl/Cassione, Gelsone, Hexalon, Isocyclemone E, methyl-lavender ketone, muscone, plicatone, para-t.-butylcyclohexanone, verdone, methyl cyclocitrone, neobutenone, veloutone, 2,4,4,7-tetramethyloct-6-en-3-one, tetrameran, hedione, florazolone, and mixtures of two or more of the foregoing ketones.

Preferred perfume aldehydes useful as benefit agents can comprise any perfume material which is chemically an aldehyde, which can, like the perfume ketone component, impart a desirable odour or benefit to surfaces which have been contacted with the delivery systems formed from it. As with the perfume ketone benefit agents, the perfume aldehyde benefit agents can comprise a single individual aldehyde or mixtures of two or more perfume aldehydes. In addition, the perfume aldehydes materials useful herein will preferably comprise aldehydes that are bulky. By bulky it is meant that the perfume aldehydes will have high molecular weight and have a high boiling point. For purposes of the invention, high boiling point perfume aldehydes are those having a boiling point above 225°C. For the purpose of the invention, high molecular weight perfume aldehydes are those having a molecular weight above 150 g/mol. Examples for aldehyde perfumes are listed in WO 05/003434, page 10 and 11. Examples for preferred aldehyde perfumes include adoxal, anisic aldehyde, undecylenic aldehyde, cymal, ethyl vanillin, florhydral, helional, heliotropin, hydroxycitronellal, koavone, lauric aldehyde, lyral, triplal, melonal, methyl nonyl acetaldehyde, P.T. buccinal, phenyl acetaldehyde, undecylenic aldehyde, vanillin, citral, 2,6,10-trimethyl-9-undecenal, 3.dodecenal, α-n-amyl cinnamic aldehyde, 3-(4-tert.-butylphenyl)-propanal, 2-methyl-3-paramethoxyphenyl-propanal.

The inventive porous material further contains a perfume which is comprised in the storage system as indicated above. Perfumes can be of any formula as far as the respective molecule is considered to have a pleasant odour. Examples for perfumes (c) that are ketones or aldehyde perfumes are listed above. Examples for perfumes that are neither ketones nor aldehydes include are known to persons skilled in the art.

In one embodiment of the present invention, the storage system (b) is selected from particulate storage systems with an average diameter exceeding the average pore diameter of the respective open-cell foam (a).

In another embodiment of the present invention, the storage system (b) is selected from particulate storage systems with an average diameter not exceeding the average pore diameter of the respective open-cell foam (a).

In one embodiment of the present invention, storage system (b) is located throughout the open-cell foam (a).

In another embodiment of the present invention, storage system (b) is located on special parts of open-cell foam (a), and other parts of open-cell foam (a) are free from storage system (b). E.g., storage system (b) can be located in the form of layers in open-cell foam (a), or only on one or more of the outer surfaces.

In one embodiment of the present invention, storage system (b) is deposited in the form of one or more films in the pores of open-cell foam (a). Storage system (b) then contains perfume (c) in absorbed or dissolved or chemically linked form in said film or one or more of said film(s).

In one embodiment of the present invention, inventive porous materials can comprise one or more additives (d), e.g., one or more surfactants (detergents) which may be anionic, cationic, or non-ionic. Further additives may comprise complexing agents, bleaching agents, and organic solvents.

In one embodiment of the present invention, suitable anionic surfactants include C₁-C₄-alkyl diphenyl ether sulphonates and alkyl carboxylates. Other suitable anionic surfactants herein include water soluble salts or acids of the formula R¹OSO₃M wherein R¹ is preferably a C₁₀-C₂₄ hydrocarbyl, preferably C₁₂-C₁₈ alkyl or hydroxyl-C₁₂-C₁₈-alkyl, and M is H or ammonium or substituted ammonium or a metal cation, such as sodium, potassium, or lithium. Other suitable anionic surfactants include soap salts, C₉-C₂₀ linear alkylbenzenesulfonates, C₈-C₂₂ primary or secondary alkylsulfonates, sulfonated polycarboxylic acids, C₈-C₂₄ alkylpolyglycolethersulfates (containing up to 10 moles of ethylene oxide); alkyl ester sulfonates, sulfates of alkylpolysaccharides, alkyl polyethoxy carboxylates, such as those of the formula R²O(CH₂CH₂O)ₖCH₂COO-M⁺ wherein R² is a C₈-C₂₂ alkyl, branched or linear, k is an integer from 0 to 10, and M is as defined above. Resin acids and hydrogenated resin acids are also suitable anionic surfactants. Further examples are given in "Surface Active Agents and Detergents" (Vol. I and II by Schwartz, Perry and Berch). A variety of suitable surfactants are also generally disclosed in US 3,929,678.

Suitable cationic surfactants are in general C₆-C₁₈-alkyl-, -aralkyl- or heterocyclyl-containing primary, secondary, tertiary or quaternary ammonium salts, alkanolammonium salts, pyridinium salts, imidazolinium salts, oxazolinium salts, morpholinium salts, thiazolinium salts and also salts of amine oxides, quinolinium salts, isoquinolinium salts, tropylium salts, sulfonium salts and phosphonium salts. By way of example there may be mentioned dodecylammonium acetate or the corresponding hydrochloride, the chlorides or acetates of the various 2-(*N,N,N*-tri-methylammonium)-ethylparaffinic esters, *N*-cetylpyridinium chloride, *N*-laurylpyridinium sulfate and also *N-*cetyl-*N,N,N*,-trimethylammonium bromide, *N*-dodecyl-*N,N,N*,-trimethylammonium bromide, *N,N*-distearyl-*N,N*-dimethylammonium chloride and also the gemini surfactant *N,N*-(lauryldimethyl)ethylenediamine dibromide. Numerous further examples are to be found in H. Stache, Tensid-Taschenbuch, Carl-Hanser-Verlag, Munich, Vienna, 1981 and in McCutcheon's, Emulsifiers & Detergents, MC Publishing Company, Glen Rock, 1989. Preferred cationic surfactants for use herein are trimethyl quaternary ammonium compounds, such as myristyl trimethylsulfate, cetyl trimethylsulfate and/or tallow trimethylsulfate.

Suitable non-ionic surfactants are for example ethoxylated mono-, di- and tri-alkylphenols (degree of ethoxylation: 3 - 50, alkyl radical: C₄-C₁₂) and also alkoxylated, especially propoxylated or ethoxylated fatty alcohols (degree of alkoxylation, in particular ethoxylation: 3 - 80, alkyl radical: C₆-C₃₆). Commercially available examples are the Lutensol® brands from BASF Aktiengesellschaft and the Triton® brands from Union Carbide.

Suitable organic solvents that may be useful as additive (d) can be organic solvents having a good dissolving ability for greasy stains. Preferred organic solvents include those which are at least partially water-miscible. Exemplary organic solvents include alcohols such methanol, ethanol, isopropanol, ethers, such as diethylene glycol diethylether, diethylene glycol dimethylether, propylene glycol dimethylether, propylene glycol monomethylether, propylene glycol monoethylether, propylene glycol monopropylether, propylene glycol monobutylether, ethylene glycol monobutylether, dipropylene glycol monomethylether, dipropylene glycol monopropyl ether, dipropylene glycol monobutyl ether, diethyleneglycol monobutylether, esters such as acetates or propionates of C₁-C₆-monoalkylethers of ethylene glycol or propylene glycol, such as propylene glycol monomethyl ether acetate, N-methyl pyrolidone and tetrahydrofuran. Mixtures of several organic solvents can also be used.

Suitable complexing agents (hereinafter also named chelating agents) include, but are not limited to, carboxylates, especially amino carboxylates, phosphates, phosphonates, polyfunctionally-substituted aromatic compounds, polyamines, and mixtures thereof.

Suitable phosphonate chelating agents useful herein include alkali metal ethane 1-hydroxy diphosphonates (HEDP), alkylene poly(alkylene phosphonate), and amino phosphonate compounds, including amino tri(methylene phosphonic acid) (ATMP), nitrilo trimethylene phosphonates (NTP), ethylene diamine tetra methylene phosphonates, and diethylene triamine penta methylene phosphonates (DTPMP).

Suitable amino carboxylates to be used herein as chelating agents include ethylene diamine tetra acetates, diethylene triamine pentaacetates, diethylene triamine pentaacetate (DTPA), N- hydroxyethylethylenediamine triacetates, nitrilotri-acetates, ethylenediamine tetrapropionates, triethylenetetraaminehexa-acetates, ethanol-diglycines, propylene diamine tetracetic acid (PDTA) and methyl glycine di-acetic acid (MGDA), both in their acid form, or in their alkali metal, ammonium, and substituted ammonium salt forms. Particularly suitable amino carboxylates to be used herein are diethylene triamine penta acetic acid, propylene diamine tetracetic acid (PDTA) which is, for instance and methyl glycine di-acetic acid (MGDA). A preferred biodegradable chelating agent for use herein is ethylene diamine N,N'-disuccinic acid, or alkali metal, or alkaline earth, ammonium or substitutes ammonium salts thereof or mixtures thereof. Ethylenediamine N,N'- disuccinic acids, especially the (S,S) isomer has been extensively described in US 4,704, 233.

Useful phosphates include, but are not limited to, alkali metal diphosphate such as sodium potassium diphosphate, sodium pyrophosphate, sodium tripolyphosphate, and mixtures thereof.

Useful phosphonates include, but are not limited to, ethylene diaminetri(methylene phosphonate), ethylenediaminetetrakis (methylenephosphonates), ethylenediamine-N,N'-disuccinic acid (EDDS), diethylene triamine penta (methylene phosphonate) ("DTPMP"), ethylene diaminetri(methylene phosphonate), hexamethylene diamine tetra (methylene phosphonate) (EDTMP), α-hydroxy-2 phenyl ethyl diphosphonate, methylene diphosphonate, hydroxy 1,1-hexylidene diphosphonate, vinylidene 1,1 diphosphonate, ethane 1-hydroxy-1,1-diphosphonate, 1,2 dihydroxyethane 1,1 diphosphonate, hydroxy-ethylene 1,1 diphosphonate, ethane, 1,1,2-triphosphonate, and mixtures thereof.

Useful polyfunctionally-substituted aromatic chelating agents include, but are not limited to, dihydroxydisulfobenzenes such as 1,2-dihydroxy-3,5-disulfobenzene, and mixtures thereof.

Further carboxylate chelating agents to be used herein include salicylic acid, aspartic acid, glutamic acid, glycine, malonic acid or mixtures thereof.

Suitable bleaching agents are selected from the group consisting of hydrogen peroxide sources, preformed peroxycarboxylic acids, hypohalite bleach sources such as sodium hypochlorite and mixtures thereof.

As used herein, hydrogen peroxide sources refer to any compound that produces hydrogen peroxide when said compound is in contact with water or other solvent. Suitable hydrogen peroxide sources for use herein include persulfates, peroxodisulfate, persulfuric acid, percarbonates, perborates, metal peroxide, perphosphates, persilicates, urea peroxyhydrate and mixtures of two or more of the preceding compounds. Suitable counterions, if required, can be alkali metals and in particular sodium.

Suitable preformed peroxycarboxylic acids include those containing one, two or more peroxy groups, and can be aliphatic or aromatic. When the peroxycarboxylic acid is aliphatic, the unsubstituted acid preferably has the formula: HO-O-C(O)-(CH₂)ₙ-Y¹, wherein Y¹ can be, for example, H, CH₃, CH₂Cl, COOH, or C(O)OOH; and n is an integer from 1 to 20. Branched analogs are also acceptable. When the peroxycarboxylic acid is aromatic, the respective unsubstituted acid suitably has formula HO-O-C(O)-C₆H₄-Y² wherein Y² is hydrogen, alkyl, C₁-C₄-alkylhalogen, halogen, or -COOH or -C(O)OOH, the preferred halogen being chlorine. Monoperoxycarboxylic acids useful as oxygen bleach herein are further illustrated by alkyl percarboxylic acids and aryl percarboxylic acids such as peroxybenzoic acid and ring-substituted peroxybenzoic acids, e.g., peroxy-α-naphthoic acid; aliphatic, substituted aliphatic and arylalkyl monoperoxy acids such as peroxylauric acid, peroxystearic acid, and N,N-phthaloylaminoperoxycaproic acid (PAP); and 6-octylamino-6-oxo-peroxyhexanoic acid. Peracids can be used in the acid form or as any suitable salt with a bleach-stable cation.

Suitable hypohalite bleaching agents may be provided by a variety of sources, including bleaching agents that lead to the formation of positive halide ions and/or hypohalite ions, as well as bleaching agents that are organic based sources of halides, such as chloroisocyanurates. Suitable hypohalite bleaching agents for use herein include the alkali metal and alkaline earth metal hypochlorite, hypobromite, hypoiodite, chlorinated trisodium phosphate dodecahydrate, potassium and sodium dichloroisocyanurates, potassium and sodium trichlorocyanurates, N-chloroimides, N-chloroamides, N-chloroamines and chlorohydantoins.

Suitable additives (d) may be biocides, such as silver particles or monomeric or polymeric organic biocides, such as phenoxyethanol, phenoxypropanol, glyoxal, thiadiazines, 2,4-dichlorobenzyl alcohols, and preferably isothiazolone derivatives, such as MIT (2-methyl-3(2H)-isothiazolone), CMIT (5-chloro-2-methyl-3(2H)-isothiazolone), CIT (5-chloro-3(2H)-isothiazolone), BIT (1,2-benzoisothiazol-3(2H)-one), and also copolymers of N,N-di-C₁-C₁₀-alkyl-ω)-amino-C₂-C₄-alkyl (meth)acrylate, in particular copolymers of ethylene with N,N-dimethyl-2-aminoethyl (meth)acrylate.

Suitable additives (d) may be solids, e.g. abrasive materials or fillers which may be inorganic or organic materials, e.g. sand, lime (CaCO₃), silicates with an average particle diameter (number-average) in the range from 1 µm to 1 mm, or colloidal silica, preferably inorganic material are selected from oxides, chlorides, sulfates, phosphates, carbonates of Mg, Mn, Ba, Ca, W, Zr, Ti, Si, Mo, in particular TiO₂, SiO₂ and Al₂O₃. Particularly preferred inorganic fillers are selected from zeolite based materials and silica based materials. Suitable zeolite based materials are described in the following reference texts: ZEOLITE SYNTHESIS, ACS Symposium Series 398, Eds. M. L. Occelli and H. E. Robson (1989) pages 2-7; ZEOLITE MOLECULAR SIEVES, Structure, Chemistry and Use, by D. W. Breck, John Wiley b Sons (1974) pages 245-250, 313-314 and 348-352. SiO₂ exists in a variety of crystalline forms and amorphous modifications, any of which are suitable for use herein. In particular, silicas having a high surface area or in agglomerated forms are preferred (i.e., clays or shells). Without being restrictive to a family of silica based materials, commonly silica which is in a highly purified form such that is contains at least 90%, preferably 95%, more preferably 99% silicon dioxide (i.e.: a silica gel having a 100% silica content, and fumed silica) is preferred. Alternatively, silica based materials may be provided from other sources such as metal silicates including sodium silicate. Further suitable materials are water-insoluble sodium polymetaphosphate, hydrated alumina, dicalcium orthophosphate dihydrate, calcium pyrophosphate, tricalcium phosphate, calcium polymetaphosphate.

Particularly preferred organic materials are polymers which may be thermoplastic polymeric materials. Suitable thermoplastic polymeric materials for use in the present invention are selected from the group consisting of polyolefins, polyesters, polyvinyl chlorides, polyamides, mixtures thereof and copolymers thereof. Specific examples of polymeric materials include but are not limited to polypropylene, polyethylene, polybutylene, polystyrene, polyethylene terephthalate, polyamide, polyacrylate, polyvinyl chloride, polyvinyl alcohol, ethylene vinyl acetate copolymers and mixtures thereof. Polymers may be in bead shape or randomly shaped. In the context of the present invention, bead-shaped polypropylene is particularly preferred.

Further examples for suitable additives (d) are:
dissolved materials as constituents of storage system (b), in particular in embodiments where storage system (b) is an organic polymer,
carbon based materials such as carbon black, activated carbon, charcoal, activated or non-activated, and may be porous or not,
colorants, such as dyes or pigments,
lubricants, such as silicon oils, mineral oils, and fluorinated polymers,
cross-linkers, such as ionotropic cross-linkers and covalent cross-linkers, examples for ionotropic cross-linkers being charged minerals, charged silica, charged zeolite, charged hectorite, polyvalent cations, polyanions or/and polycations derived from Al, Cu, Zr; examples for covalent cross-linkers are organic molecules with at least two preferably non-conjugated C-C double bonds such as bis(meth)acrylates, tris(meth)acrylates, bis(meth)acrylamides, divinylethers, diallyl ethers, triallyl ethers, in particular N,N'-methylene bisacrylamide, ethylene glycol di(meth)acrylate, polyethylenglykol di(meth)acrylate derived from polyethylene glycol with a molecular weight M_{w} in the range from 106 to 2,000 g/mol, propylene glycol di(meth)acrylate, 1,4-butandiol di(meth)acrylate, 1,6-hexandiol di(meth)acrylate, 1,1,1-trimethylol propane tri(meth)acrylate, di- and trimesters of polyalcohols such as triols, tetraols, and polyols, diallylphthalate, divinylbenzene,
plasticizers such as polyesters which are liquid at room temperature, pentaerythrit tetrabenzoate, sugar esters such as sucrose benzoate, aromatic sulfonamides which are solids at room temperature such as *ortho-* and *para*-toluenesulfonamide, castor oil and castor oil derivatives, diacetin, reduced sugar such as sorbitol, monocarboxylic C₈-C₂₂-fatty acids and their derivatives, and citric acid esters, such as acetyltri-n-butylcitrate and triethylcitrate.

In one embodiment of the present invention, inventive porous materials comprise in the range from 1 to 70, preferably 2 to 40% by weight foam (a), in the range from 30 to 99, preferably 60 to 98 % by storage system (b), of which in the range from 0.1 to 30, preferably 1 to 10 % by weight is perfume (c), percents being based on the respective whole inventive porous material.

In one embodiment of the present invention, inventive porous material can contain up to 50 % by weight of additive(s) (d), referring to the respective whole inventive porous material. Preferably, inventive porous materials can contain 1 to 40% by weight additive(s) (d).

A further aspect of the present invention is a process for making inventive porous materials (also being referred to as inventive process). The inventive process comprises bringing into contact
(a) an open-cell foam with a density in the range from 5 to 1,000 kg/m³ and with an average pore diameter in the range from 1 µm to 1 mm, and
(b) a storage system comprising
(c) a perfume.

Foam (a), storage system (b) as well as perfume (c) have been characterised above.

In one embodiment of the present invention a material that is to form storage system (b) is first contacted and optionally chemically linked with perfume (c) and then brought into contact with open-cell foam (a). Suitable materials that are to form storage system (b) are selected from selected from carrier particles, nano-latexes, matrix polymer compositions, amine-assisted delivery compositions, perfumed polymers and combinations thereof.

In one embodiment of the present invention, a material that is to form storage system (b) is first contacted and optionally chemically linked with perfume (c) and is then brought into contact with open-cell foam (a) in form of a liquid formulation, e.g. a dispersion or a solution or a melt.

Contacting storage system (b) with open-cell foam (a) can be carried out, e.g., with the help of at least one syringe, by laminating, by spraying, or by wetting foam (a) with a preferably aqueous formulation of storage system (b), followed optionally by drying.

Special examples of ways of bringing about the contact are via immersion of foam (a) in storage system (b)) via saturation of foam (a) with storage system (b), via preferably complete spraying of foam (a) with storage system (b), or via application of storage system (b) to foam (a) by calendering.

If storage system (b) is used as dispersion or solution in water, it may be used in the form of aqueous formulations that comprise storage system (b).

Aqueous formulations used according to the invention and comprising storage system (b) preferably comprise from 0.05 to 40% by weight, with preference from 10 to 35% by weight, of storage system (b).

In another embodiment of the present invention, material which is to form storage system (b) and perfume (c) are introduces separately into open-cell foam (a), preferably by one of the techniques described above.

After having brought open-cell foam (a) into contact with storage system (b), the aforementioned ingredients can be linked together either mechanically or by thermal treatment.

In one embodiment of the present invention, following the contact process, open-cell foam (a) and storage system (b) may permitted to interact, for example over a period in the range from 1 second to 24 hours, preferably from 5 seconds to 10 hours, and particularly preferably from 10 seconds to 6 hours.

In one embodiment of the inventive production process, open-cell foam (a) and storage system (b) are brought into contact at temperatures in the range from 0°C to 250°C, preferably from 5°C to 190°C, and particularly preferably from 10°C to 165°C.

In one embodiment of the inventive production process, foam (a) and polymer (b) and active ingredient (c) are first brought into contact at temperatures in the range from 0°C to 50°C, and then the temperature is changed, for example raised to temperatures in the range from 60°C to 250°C, preferably from 65°C to 180°C.

In another embodiment of the inventive production process, foam (a) and polymer (b) and active ingredient (c) are first brought into contact at temperatures in the range from 0°C to 120°C, and then the temperature is changed, for example raised to temperatures in the range from 30°C to 250°C, preferably from 125°C to 200°C.

In one preferred embodiment of the inventive production process, the selection of solvent and the temperature profile are such that there is no substantial alteration in most of the structure parameters of foam (a).

In another preferred embodiment of the present invention, the selection of the amounts of the starting materials - foam (a), storage system (b), and, if appropriate, additives (d) - is such that inventive foam has markedly higher density than the respective foam (a) used as starting material.

In one embodiment of the present invention, operations to carry out the inventive production process are carried out at atmospheric pressure. In another embodiment of the present invention, operations for carrying out the inventive process are carried out at elevated pressure, for example at pressures in the range from 1.1 bar to 10 bar. In another embodiment of the present invention, operations for carrying out the inventive production process are carried out at reduced pressure, for example at pressures in the range from 0.1 mbar to 900 mbar, preferably up to 100 mbar.

In one embodiment of the present invention, foam (a) is brought into contact with storage system (b) in such a way that storage system (b) becomes distributed with maximum uniformity in all dimensions over foam (a). Suitable methods are methods effective for application purposes. Examples which may be mentioned are: complete saturation, immersion, flow coating, drum-application, spray-application, e.g. compressed-air spraying, airless spraying, and high-speed rotary atomization, and also coating, doctor-application, calender-application, spreading, roller-application, wiper-application, and rolling.

In another embodiment of the present invention, foam (a) is brought into contact with storage system (b) in such a way as to bring about non-uniform distribution of storage system (b) on foam (a). For example, in one embodiment of the present invention foam (a) may be sprayed non-uniformly with storage system (b) and the materials (a) and (b) may then be allowed to interact. In another embodiment of the present invention, foam (a) may be incompletely saturated with storage system (b). In yet another embodiment of the present invention, a part of foam (a) may be brought into contact once, and another part of foam (a) may be brought into contact at least twice, with storage system (b). In another embodiment, foam (a) is saturated and the uppermost layer is rinsed clean with, by way of example, water. The materials are then allowed to interact. The result is coating within the core of foam (a); the outer surface remains uncoated.

If foam (a) is brought into contact with storage system (b) in such a way that non-uniform distribution of storage system (b) has been brought about on foam (a), the effect achieved by, for example, allowing the materials to interact over a period of 2 minutes or more is that not just the outermost layer of foam (a) is brought into contact with storage system (b).

If foam (a) is brought into contact with storage system (b) in such a way as to bring about non-uniform distribution of storage system (b) on foam (a), inventive porous material may have mechanical properties that are non-uniform over its cross section. For example, according to the invention it is possible that it is harder at those sites where it has been brought into contact with relatively large proportions of at least one storage system (b) than at those sites where it has been brought into contact with a smaller amount of storage system (b).

In one embodiment of the present invention, rinsing may be carried out, for example using one or more solvents, and preferably using water, after contact.

In one embodiment of the present invention, after contact and after optional rinsing, drying may be carried out, for example mechanical drying, e.g. via squeezing or calendering, in particular via squeezing through two rollers, or thermally, for example in microwave ovens, hot-air blowers, or drying cabinets, in particular vacuum drying cabinets, the possible temperatures at which drying cabinets are operated being temperatures which are below the softening point or melting point of storage system (b) by from 25 to 100°C. In the context of vacuum drying cabinets, vacuum may mean a pressure in the range from 0.1 to 850 mbar, for example.

The time taken for any desired drying steps is by definition excluded from the interaction time for the purposes of the present invention.

In one embodiment of the present invention, thermal drying may be brought about via heating to temperatures in the range from 20°C to 150°C, for example over a period of from 10 seconds to 20 hours. It is preferable to carry out heating to a temperature which is above, by at least 20°C, the glass transition temperature of storage system (b), preferably to a temperature which is above, by at least 30°C, the glass transition temperature of the material which is to form storage system (b). It is preferable to carry out heating to a temperature which is below the melting or drop point of the material which is to form storage system (b), for example below the melting or drop point by at least 5°C.

If it is desired to make inventive porous materials that also contain one or more additives (d), it is possible to introduce additive (d) into open-cell foam (a) in the same step as storage system (b) or n a separate step which may be performed before or after introduction of storage system (c).

In one embodiment of the present invention, foam (a) may not only be brought into contact with storage system (b)but may also be brought into contact with at least additive (d).

An example of a procedure for this purpose brings at least one foam (a) into contact, in different operations or preferably simultaneously, with storage system (b) and with at additive (d).

Inventive porous materials or porous materials produced by the inventive process have an advantageous range of properties. In particular, any perfume (c) included in the inventive porous materials will be released in a constant rate over a long time. Furthermore, they have improved cleaning power or cleaning action, good resistance to hydrolysis, improved resistance to acid, good sound absorption, and - for example if used to produce cleaning materials - good durability. Soiling of the foams proceeds very slowly. Any inventive porous material that may have become soiled can readily be cleaned without irreversible damage.

Inventive porous materials can be used advantageously for production of
cleaning materials, such as wipers, brushes, cleaning cloths, cleaning implements or cleaning granules,
filters, such as air filters, pond filters, aquarium filters, water filters, or else as a matrix for ceramic filters,
humidifiers, water distributors,
packaging elements, in particular for impact- or water-sensitive products,
sound-deadening elements, buildings-insulation materials, in particular roof-insulation materials and wall-insulation materials.

If the intention is to use inventive porous materials for production of filters, preference is given to sack filters and matrices of ceramic filters. If the intention is to use inventive porous materials for production of automobile parts, ventilation units are particularly preferred.

A special method of using inventive porous materials is for the production of or as cleaning implements. "Cleaning implements" in the context of the present invention refer to an article of manufacture of any suitable shape and/or size and/or volume suitable for cleaning, i.e., removing spots and/ore stains from hard or soft surfaces. In a highly preferred embodiment according to the present invention, the cleaning implement herein is in a shape and/or size and/or volume suitable for use by a consumer to clean hard surfaces therewith.

Suitable shapes of the cleaning implements herein may be selected from the group consisting of: cube shape, rectangular shape, pyramid shape, cylindrical shape, cone shape, pencil eraser shape, cuboid shape, tetrahedron shape; sphere shape; globular shape; and ellipsoid shape. Preferably, said cleaning implement has a shape selected from the group consisting of: cube shape, rectangular shape, pencil eraser shape, and cuboid shape.

Suitable volumes of the cleaning implements herein may be from 1 cm³ to 10,000 cm³, preferably from 10 cm³ to 1,000 cm³, more preferably from 150 cm³ to 250 cm³.

In a highly preferred embodiment herein, cleaning implements herein have a cuboid shape defined by three groups of parallel and equal length sides, referred to as α, β and γ, wherein α ranges from 2 cm to 20 cm, preferably 4 cm to 8 cm, β ranges from 2 cm to 20 cm preferably 8 cm to 15 cm, and γ ranges from 1.5 cm to 5 cm, preferably 2 cm to 4 cm.

Cleaning implements of a particular embodiment of the present invention comprise a single layer of inventive porous material.

In another embodiment of the present invention, cleaning implements may comprise of at least two layers of inventive porous material.

In a preferred embodiment according to the present invention cleaning implements may comprise additional layers of material. Preferably, in the cleaning implement herein inventive porous material forms a first layer and said cleaning implement additionally comprises a second layer of material, e.g., of a second foam material as discussed herein below and particularly preferably of foam (a).

The layers of inventive porous material and second foam material or foam (a) may be arranged in said cleaning implement in any way suitable. In a preferred embodiment the layers of inventive porous material and second foam or foam (a) are arranged parallel to at least one side, preferably two opposite sides, of the cleaning implement. However, the cleaning implement may also have an irregular shape. Indeed, the thickness of the layers may be constant or vary throughout the cleaning implement. The separation line between the two layers may form a straight line or may form a bend or be completely irregular. In addition, the separation plane of the layers may be in the centre of cleaning implement, dividing the implement in two equal parts, or may be in the upper or lower part of the implement. In addition, the cleaning implement may be in the shape of a sphere or a globule or an ellipsoid with the separation plane of the layers forming a spherical segment or one of the layers, preferably the layer of a second foam here, forming a sphere in a sphere (similar to the layers of an onion).

In another highly preferred embodiment herein the cleaning implement herein is in the shape of a pencil eraser. By "shape of a pencil eraser" it is meant herein a voluminous body having six walls, wherein three pairs of parallel and equally shaped and sized walls exist and wherein one pair of walls are in the shape of a parallelogram and the remaining two pairs of walls are of rectangular shape.

In order to obtain suitable cleaning implements according to a preferred embodiment of the present invention, the inventive modified open-cell foam layer and the second layer of a second foam, in particular foam (a) have to be attached to each other. This attachment can be achieved by any attachment means suitable for joining the two layers. The attachment may be either a permanent attachment (wherein the two layers cannot be separated without inflicting substantial damage to the layers) or temporary attachment (wherein the two layers may be separated without inflicting substantial damage to the layers). Suitable attachment means providing a permanent attachment are selected from the group consisting of: foam flame laminating the two layers together; use of a permanent adhesive; sewing the two layers together; and needle-punching the two layers together; and combinations thereof. Suitable attachment means providing a temporary attachment are selected from the group consisting of: a weak adhesive; Velcro; and a water-based, water-soluble coating or adhesive; and combinations thereof.

In a preferred embodiment here, the attachment of layers herein is a permanent attachment. Even more preferably, the layers are joined together by foam flame lamination.

Foam flame lamination is a continuous process that can adhere foams and additional materials, if any, to one or both sides of a foam in a single pass. The process of flame lamination involves the passing of a first foam (either the modified open-cell foam herein or the second foam herein) over an open flame, which creates a thin layer of molten foam / polymer. A second foam (either the second foam herein or the inventive porous system herein, depending on the first step) is pressed against the first foam while it is still in the molten state. Foams and additional material, if any, can be adhered to one or both sides of the foam in a single pass. Furthermore, additional passes are optional. The strength of the bond depends upon the foams and additional material, if any, selected and the processing conditions (i.e., gas type, flame height and spread, foam burn-off and nip pressure).

The cleaning implement according to the present invention may contain more than two layers, wherein said additional layers, if, any, may be of the same or similar materials as the modified open-cell foam or said second foam, or may be made of another material having similar properties as said second foam or different properties therefrom. Preferably, inventive cleaning implements may be in a so-called sandwich configuration, wherein three layers are present.

The ratio of said inventive modified open-cell foam to said second foam in the cleaning implement according to the present invention is preferably from 20:1 to 1:20 by volume, more preferable from 10:1 to 1:10 by volume, even more preferably 5:1 to 1:1, still more preferably 5:1 to 2:1, and most preferably from 4:1 to 3:1 by volume.

In order to obtain suitable cleaning implements according to the present invention, the inventive modified open-cell foam- and second foam-raw materials may have to be modified in shape and/or size. Suitable means of modifying the shape and/or size of melamine foam- and second foam-raw materials may be selected from the group consisting of cutting, breaking, and tearing, and combinations thereof.

Suitable second foams for use herein are selected from the group of foams consisting of polyurethane foams, polypropylene foams, polyethylene foams, cellulose foam sponges; naturally occurring sponges, open-cell polyester foams, and cross-lined polyethylene foams; and combinations thereof. Particularly preferred is foam (a)

The thickness of said layer of a second foam is preferably up to 30 mm, preferably from 0.5 mm to 20 mm, more preferably from 1 mm to 15 mm, even more preferably from 2 mm to 10 mm, and most preferably from 4 mm to 8 mm.

The invention is illustrated by the means of examples.

### Examples

All percentages are per weight unless expressly stated otherwise.

### I. Production of an inventive porous material

### I.1 Production of unmodified open-cell foam (a.1)

A spray-dried melamine-formaldehyde precondensate (molar ratio 1:3, molecular weight about 500) was added, in an open vessel, to an aqueous solution with 3% by weight of formic acid and 1.5% of the sodium salt of a mixture of alkylsulfonates having from 12 to 18 carbon atoms in the alkyl radical and (K 30 emulsifer from Bayer AG), the percentages being based on the melamine-formaldehyde precondensate. The concentration of the melamine-formaldehyde precondensate, based on the entire mixture composed of melamine-formaldehyde precondensate and water, was 74%. The resultant mixture was vigorously stirred, and then 20% of n-pentane were added. Stirring was continued (for about 3 min) until a dispersion of homogeneous appearance was produced. This was applied, using a doctor, onto a Teflon-treated glass fabric as substrate material and foamed and cured in a drying cabinet in which the prevailing air temperature was 150°C. The resultant temperature within the foam composition was the boiling point of n-pentane, which was 37.0 °C under these conditions. After from 7 to 8 min, the foam had risen to its maximum height. The foam was then left for a further 10 min at 150°C in the drying cabinet; it was then heat-conditioned for 30 min at 180°C. This gave unmodified foam (a.1).

The following properties were determined on the unmodified foam (a.1):
open-cell factor to DIN ISO 4590: 99.6%,
compressive strength (40%): 1.3 kPa, determined to DIN 53577,
density: 10.0 kg/m³, determined to EN ISO 845,
average pore diameter: 210 µm, determined via evaluation of micrographs of sections, BET surface area: 6.4 m²/g, determined to DIN 66131.

### 1.2 Production of inventive porous materials I.2.1 to 1.2.27

Unmodified foam (a.1) from Example I.1 was cut, unless otherwise stated, into cleaning implements having lengths of about 120 mm and widths of about 60 mm. Their thickness in each example was dependent on the plies used in each instance.

### Example I.2.1

A storage system (b.1) comprising a low melting point hotmelt matrix polymer composition comprising
30% by weight of Elvax 250,
15% by weight Foralyn 5020F,
5% by weight Kristalex F85,
10% by weight acetyl tributyl citrate, and
and 40% by weight Liquiblu 4 perfume (c.1) (Procter & Gamble)
was prepared. The composition was then heated to 60°C until fully molten in a melting tank, before a hotmelt pump with a slot-coating nozzle (Nordson™) was used to slot-coat the composition at about 125 g/m² of foam surface, in a series of distinctive lanes, onto the surface of melamine foam (a.1) sheet. Foam (a.1) sheet had a thickness about 15 mm. With the help of an additional adhesive, an open-cell polyurethane foam (Sweetane™ series by Recticel™) having a thickness of 6 mm was adhered to foam (a.1) along the surface coated with the matrix polymer composition. Thus the storage system (b.1) was located at the interface between the foam (a.1) layer and the polyurethane foam layer. Inventive porous material PM.1 was obtained.

### Example I.2.2

A storage system (b.2) comprising a low melting point polymer matrix composition comprising
25% by weight Pebax 2533
15% by weight acetyl tributyl citrate, and
60% by weight Perfume Utopia MOD M1 from IFF (c.2)
was heated to 70°C until fully molten. Then, using a Nordson™ hotmelt pump fitted with a spraying nozzle, 40g/m² of foam of the polymer matrix composition was sprayed over the surface of a foam (a.1) sheet having a thickness of 10 mm. A closed-cell polypropylene foam (Zotefoam™) having a thickness of about 10 mm was then sandwiched between two sheets of the polymer matrix composition coated foam (a.1). The three-ply laminate was then compressed to allow the penetration of the hotmelt into polypropylene and (a.1) foams. Thus, storage system (b.2) was located at the interface of the foam (a.1) layer and the supporting layer and also within foam (a.1). Inventive porous material PM.2 was obtained.

### Example 1.2.3

A mixture of
50% by weight zeolite A and 50% by weight mesoporous silica ZSM-5, with particle diameters above about 150µm,
percentages referring to the complete mixture,
was deposited, at a concentration of about 40g/m² of foam, across one of the two largest surfaces of a foam (a.1) sheet having a thickness of about 14 mm.
A perfume raw material selected from Lillial, Cyclacet, Downy or Lemonvert perfume by Procter & Gamble, or a perfume mix of 5% by weight allylamylglycollate, about 5% by weight thereof citraldiethylacetal, 30% by weight linalool, 30% by weight linalyl acetate and 30% by weight orange oil was then sprayed onto the zeolite/silica particles covering surface of the melamine foam at a concentration of about 16g/m². A second sheet of foam (a.1) of about equal thickness was then adhered to the first sheet so as to form a two-ply laminate with the perfume-loaded porous carrier-particles being located across the interface between the two plies. Inventive porous material PM.9 was obtained.

### Example I.2.4

Examples I.2.1 to I.2.3 were repeated but the respective free perfume (c) was also applied in combination with the respective storage system. Inventive porous materials PM.1.1 to PM.9.1 were obtained.

### Example I.2.5

Examples I.2.1 to I.2.4 were repeated; however, each time as additive (d.1) an activated carbon powder (Centaur™ from Calgon), having particle diameters of 150 µm, was sprayed at a concentration of about 70 g/m² of foam (a.1), across the surface of the respective inventive porous material. Inventive porous materials PM.1.2 to PM.9.2 (without free perfumes) and PM.1.3 to PM.9.3 (with free perfume) were obtained.

### Example I.2.6

Examples I.2.1 to I.2.4 were repeated. Each time, however, as additive (d.2) a zeolite A powder (from Degussa), having particle diameters of 150 µm, was sprayed at a concentration of about 70 g/m² of foam (a.1), across the surface of the respective inventive porous material. Inventive porous materials PM.1.4 to PM.9.4 (without free perfumes) and PM.1.5 to PM.9.5 (with free perfume) were obtained.

### Example 1.2.7

Examples I.2.1 to I.2.4 were repeated. Each time, however, a silica gel powder (from Grace) with particle diameter of 150 µm was sprayed at a concentration of about 70 g/m² of foam (a.1), across the surface of the respective inventive porous material. Inventive porous materials PM.1.6 to PM.9.6 (without free perfumes) and PM.1.7 to PM.9.7 (with free perfume) were obtained.

### II. Cleaning abilities of inventive porous materials

Inventive porous materials from I. were taken and wetted under running tab water (0,5l/12sec =7l/min) for 5 sec. Each of the inventive porous materials were then squeezed by hand, dried and stored for one day at 20°C. After each trial (each day) the scent was determined via a olfactory method. The grading of the scent intensity was from strong (s), medium (m) to low (I) and none (n). For each example 4 replicates were made. Results are summarized in Table.4. a.1.1 is the example just with perfume but without the storage system

**Table 4: Scent intensity, strong(s), medium(m), low(I), none(n) determined with an olfactory method**

| # of days | 1 | 2 | 3 | 4 | 5 | 6 | 7 | 8 | 9 | 10 | 15 |
|---|---|---|---|---|---|---|---|---|---|---|---|
| a.1.1 (ref) | s | m | l | n | n | n | n | n | n | n | n |
| PM.1 | s | s | s | s | s | s | s | m | n | n | n |
| PM.2 | s | s | s | s | s | s | m | m | n | n | n |
| PM.9 | s | s | s | s | s | s | s | s | m | m | m |
| PM1.1 | s | s | s | s | s | s | s | m | n | n | n |
| PM1.4 | s | s | s | s | s | s | s | m | m | m | m |
| PM1.6 | s | s | s | s | s | s | s | m | m | m | m |

It shows that the storage system in PM.1 to PM1.6 very effectively acts like a slow release system for perfume raw materials compared to a.1.
Each of the inventive porous materials was further used for cleaning the metal surface of a kitchen sink contaminated with resinous grease. Comparative cleaning with the a.1 porous material showed no loss in cleaning.

## Claims

1. A porous material comprising
(a) an open-cell foam with a density in the range from 5 to 1,000 kg/m³ and with an average pore diameter in the range from 1 µm to 1 mm,
(b) a storage system comprising
(c) a perfume,
wherein materials that are to form said storage system (b) are selected from carrier particles, nano-latexes, matrix polymer compositions, amine-assisted delivery compositions, perfumed polymers and combinations thereof.

2. A porous material according to claim 1, wherein said open-cell foam (a) is selected from aminoplastic foams.

3. A porous material according to any of claims 1 or 2, wherein said open-cell foam
(a) is selected from aminoplastic foams which have been produced by foaming a precondensate of at least one organic di- or triamine with at least on carbonyl compound.

4. A porous material according to any of claims 1 to 3, wherein said storage system
(b) is selected from particulate storage systems with an average particle diameter exceeding the pore diameter of the respective open-cell foam (a).

5. A porous material according to any of claims 1 to 4, wherein the storage system (b) is located throughout the open-cell foam (a).

6. A porous material according to any of claims 1 to 5, wherein the storage system (b) is bound in said open-cell foam (a) by an adhesive or physically held therein by its size.

7. A porous material according to any of claims 1 to 6, further comprising at least one additive selected from detergents, bleaching agents and complexing agents.

8. A process for production of porous materials according to any of claims 1 to 7, which comprises bringing into contact
(a) at least one open-cell foam with a density in the range from 5 to 500 kg/m³ and with an average pore diameter in the range from 1 µm to 1 mm with
(b) at least one storage system that comprises
(c) at least one perfume.

9. The process according to claim 8, wherein said storage system (b) comprising perfume (c) is sprayed on open-cell foam (a).

10. The process according to any of claims 8 or 9, wherein a material that is to form storage system (b) is first contacted and optionally chemically linked with perfume (c) and then brought into contact with open-cell foam (a).

11. The process according to any of claims 8 to 10, wherein open-cell foam (a) is selected from aminoplastic foams.

12. The process according to any of claims 8 to 11, wherein open-cell foam (a) is selected from aminoplastic foams which have been produced by foaming a precondensate of at least one organic di- or triamine with at least on carbonyl compound.
